# EUROPÄISCHE PATENTSCHRIFT

(11) **EP 0 898 658 B1**
(45) Veröffentlichungstag und Bekanntmachung des Hinweises auf die Patenterteilung: **20.02.2002**
(21) Anmeldenummer: 97923855.7
(22) Anmeldetag: 07.05.1997
(51) Int. Cl.: F16B 37/04

(54) **BEFESTIGUNGSELEMENT FÜR DEN EINSATZ IN HINTERSCHNITTENE PROFILNUTEN**
SECURING COMPONENT FOR INSERTION INTO UNDERCUT SHAPED GROOVES
ELEMENT DE FIXATION S'INSERANT DANS DES RAINURES PROFILEES CONTRE-DEPOUILLEES

(30) Priorität: 23.05.1996 DE 19620763; 16.07.1996 DE 19628582
(43) Veröffentlichungstag der Anmeldung: 03.03.1999
(73) Patentinhaber: Wanke, Oliver, 78647 Trossingen (DE)
(72) Erfinder: Wanke, Oliver, 78647 Trossingen (DE)
(74) Vertreter: Wolf, Eckhard, Dr.-Ing.
(86) Internationale Anmeldenummer: EP9702349
(87) Internationale Veröffentlichungsnummer: WO9744591

(56) Entgegenhaltungen:
- EP-A- 0 516 321
- EP-A- 0 641 943
- DE-A- 2 635 439
- DE-U- 9 414 529

## Beschreibung

Die Erfindung betrifft ein Befestigungselement für den Einsatz in eine hinterschnittene Profilnut einer Profilschiene mit einem an Hinterschneidungsflanken der Profilnut verdrehungssicher abstützbaren, mindestens eine Gewindebohrung aufweisenden Nutenstein, einem zwischen dem Nutenstein und dem Nutengrund der Profilnut abstützbaren Federelement und einer von außen her in die Gewindebohrung eingedrehten Schraube.

Befestigungselemente dieser Art sind bekannt (EP-A 0 641 943). Sie sind für die Befestigung von Bauteilen an Profilschienen bestimmt, die bei vielen industriellen Anwendungen nach dem Baukastensystem zu Maschinengestellen, Regalen, Werkstückaufspannungen und dergleichen eingesetzt werden. Zur Befestigung eines Bauteils werden zunächst die Nutensteine in die Profilnut eingeführt. Dies kann entweder frontseitig durch die Nutöffnung hindurch erfolgen, wobei der Nutenstein ein dem Öffnungsmaß der Nut entsprechendes Schlüsselmaß aufweisen und innerhalb der Nut in eine gegen die Hinterschneidungsflanken anliegende Position geschwenkt oder gedreht werden muß. Weiter ist es möglich, den Nutenstein von der Stirnseite der Profilschiene aus in die Profilnut einzuschieben. Das Federelement dient der Montageerleichterung. Es hält den Nutenstein auch bei senkrecht ausgerichteter Profilschiene innerhalb der Profilnut reibschlüssig fest. Zu diesem Zweck werden bisher meist lose Schraubendruckfedern oder an dem Nutenstein befestigte Blattfedern und Federkugeln verwendet. Die für die Befestigung des Bauteils bestimmte Schraube kann dann leicht von außen her in den durch die Feder an der Profilschiene positionierten Nutenstein eingedreht werden. Bei vielen Anwendungen dieser Art unterliegen die Schraubverbindungen einer Wechsel- oder Rüttelbeanspruchung, aufgrund der sich die Schraubverbindung lockern oder lösen kann. Es ist zwar an sich bekannt, Schraubverbindungen durch Kontermuttern oder Bremsringe gegen ein ungewolltes Verdrehen zu sichern. Bei Nutensteinen konnten die bekannten Sicherungsmittel jedoch wegen fehlender Zugänglichkeit innerhalb der Profilnut nicht eingesetzt werden.

Ausgehend hiervon liegt der Erfindung die Aufgabe zugrunde, ein Befestigungselement zu entwickeln, das einfach herstellbar ist und dennoch eine zuverlässige Abstützung des Nutensteins innerhalb der Profilnut während der Montage gewährleistet.

Zur Lösung dieser Aufgabe wurden die in den Patentansprüchen 1 und 7 angegebenen Merkmalskombinationen vorgeschlagen. Vorteilhafte Ausgestaltungen und Weiterbildungen der Erfindung ergeben sich aus den Unteransprüchen.

Die erfindungsgemäße Lösung geht primär von dem Gedanken aus, daß in den Nutenstein eine zum Nutengrund der Profilnut hin randoffene, langgestreckte nutartige Ausnehmung eingeformt ist, und daß in der Ausnehmung ein Formteil angeordnet ist, das eine in der Ausnehmung form- und/oder kraftschlüssig verankerte Basispartie und mindestens eine an der Basispartie angeformte, das Federelement bildende, über den Rand der Ausnehmung nach außen überstehende, entgegen der Federkraft in die Ausnehmung einbiegbare Federzunge aufweist.

Um eine zuverlässige Verankerung des Formteils in der Ausnehmung zu gewährleisten, ist die Basispartie zweckmäßig im Preßsitz in der Ausnehmung angeordnet. Eine weitere Verbesserung in dieser Hinsicht kann dadurch erzielt werden, daß der Ausnehmungsrand gegen die Basispartie partiell umgebördelt ist. Um eine Verdrehsicherung der Schraube zu erzielen, kann die Gewindebohrung des Nutensteins als selbsthemmendes Gewinde ausgebildet sein.

Ein weiterer wichtiger Lösungsgedanke der Erfindung besteht darin, daß das der Montageerleichterung dienende Federelement und ein zur Verdrehsicherung der Schraube dienendes Sicherungselement als einstückiges Formteil ausgebildet und im Nutenstein verdrehungssicher untergebracht werden kann. Um dies zu erreichen, wird gemäß der Erfindung vorgeschlagen, daß in den Nutenstein eine zur Gewindebohrung konzentrisch erweiterte Ringstufe und eine im wesentlichen radial in die Ringstufe mündende, zum Nutengrund der Profilnut hin randoffene langgestreckte nutartige Ausnehmung eingeformt ist, und daß ein in die Ringstufe und die Ausnehmung form- und/ oder kraftschlüssig einsetzbares Formteil vorgesehen ist, das eine Öffnung für den reibschlüssigen Durchgriff der Schraube und eine das Federelement bildende, über den Rand der Ausnehmung nach außen überstehende und entgegen der Federkraft in die Ausnehmung einbiegbare Federzunge aufweist. Die Federzunge dient bei der Montage zum reibschlüssigen Positionieren des Nutensteins innerhalb der Profilnut und sorgt hier außerdem dafür, daß das Formteil beim Eindrehen der Schraube gegenüber dem Nutenstein nicht verdreht werden kann.

Zur Herstellung des Reibschlusses zwischen der Schraube und dem Formteil weist die Öffnung des Formteils gegenüber dem Gewindedurchmesser der Schraube zweckmäßig Untermaß auf. Die Schraube kann dabei selbstschneidend in die Öffnung des Formteils eingedreht werden. Beim Eindrehen der Schraube in die Öffnung wird das Formteil radial aufgespreizt und in der Ringstufe festgeklemmt.

Die Ringstufe ist zweckmäßig als zur Gewindebohrung konzentrische Plan- oder Profilsenkung ausgebildet. Zur Verbesserung der Handhabung kann der freie Außenrand der Ringstufe zumindest partiell gegen das Formteil umgebördelt werden, so daß das Formteil unverlierbar mit dem Nutenstein verbunden ist.

Das Formteil ist zweckmäßig als Spritzgußteil aus einem elastischen Kunststoff, vorzugsweise aus Polyamid ausgebildet.

Die Nutensteine können ein der hinterschnittenen Profilnut angepaßtes, im wesentlichen T-förmiges Profil aufweisen. Um dennoch eine frontseitige Montage zu ermöglichen, kann der Nutenstein an seiner dem Nutengrund zugewandten Fläche teilzylindrisch gekrümmt oder als Einschwenk- oder Hammerkopfmutter ausgebildet werden.

Zur Verbesserung des Reibschlusses des Nutensteins im montierten Zustand ist es von Vorteil, wenn der Nutenstein an seiner gegen die Hinterschneidungsflanken des Profilstabs anpreßbaren Spannfläche zackenförmige Ausbiegungen oder Rippen aufweist, mit denen er sich beim Anziehen der Schraube am Profilstab verkrallt.

Im folgenden wird die Erfindung anhand eines in der Zeichnung in schematischer Weise dargestellten Ausführungsbeispiels näher erläutert. Es zeigen
- Fig. 1: einen Querschnitt durch eine Profilschiene mit Befestigungselement;
- Fig. 2a: bis c drei Ansichten des Nutensteins nach Fig. 1 in vergrößerter Darstellung;
- Fig. 3a: bis c drei Ansichten eines gegenüber Fig. 2a bis c abgewandelten Ausführungsbeispiels eines Nutensteins.

Das in der Zeichnung dargestellte Befestigungselement 10 ist zur Befestigung von Bauteilen an Profilschienen bestimmt. Es wird zu diesem Zweck in eine hinterschnittene Profilnut 12 der Profilschiene 14 eingesetzt. Das Befestigungselement 10 weist einen an den Hinterschneidungsflanken 16 der Profilnut 12 verdrehungssicher abstützbaren, eine Gewindebohrung 18 aufweisenden Nutenstein 20, ein zwischen dem Nutenstein 20 und dem Nutengrund 22 der Profilnut 12 abstützbares Federelement 24 und eine von außen her in die Gewindebohrung 18 eindrehbare Schraube 26 auf.

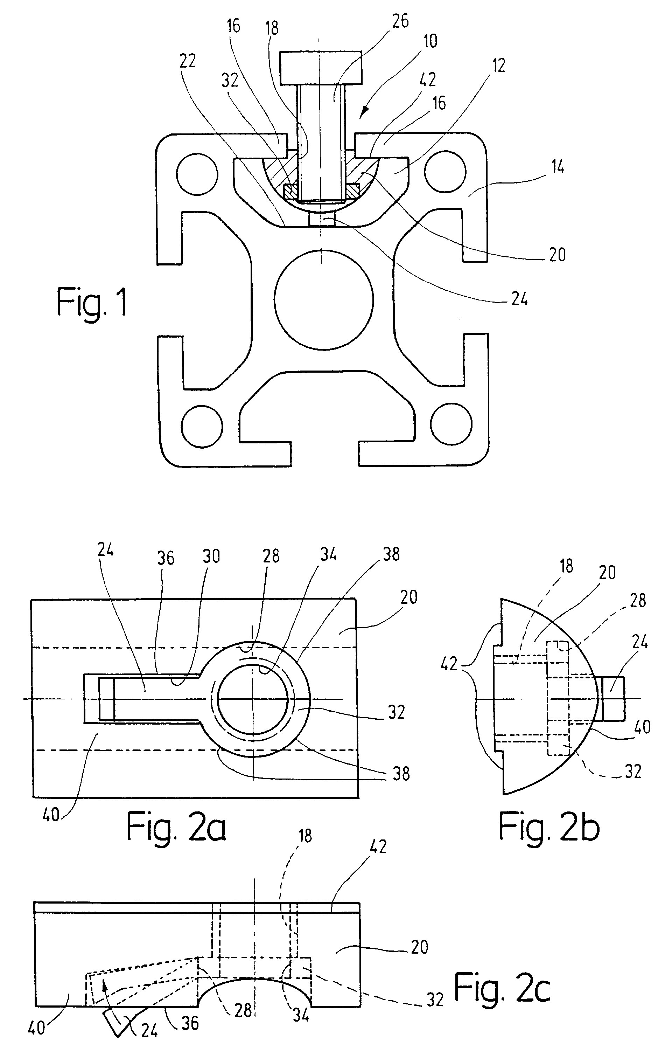

Beim Ausführungsbeispiel nach Fig. 1 und 2a bis c ist in den Nutenstein 20 eine zur Gewindebohrung 18 konzentrisch erweiterte, als Plansenkung ausgebildete Ringstufe 28 und eine radial in die Ringstufe 28 mündende, zum Nutengrund 22 der Profilnut 12 hin randoffene nutartige Ausnehmung 30 eingeformt. Weiter ist ein in die Ringstufe 28 und die Ausnehmung 30 eingesetztes Formteil 32 aus Kunststoff vorgesehen, das eine Öffnung 34 für den reibschlüssigen Durchgriff der Schraube 26 und eine das Federelement 24 bildende, über den Rand 36 der Ausnehmung 30 nach außen überstehende, entgegen der Federkraft in die Ausnehmung einbiegbare Federzunge aufweist. Die Öffnung 34 des Formteils 32 weist gegenüber dem Gewindedurchmesser der Schraube 26 Untermaß auf, so daß das Formteil beim Eindrehen der Schraube 26 in die Öffnung 34 radial aufgespreizt und dabei in der Ringstufe 28 festgeklemmt wird. Zur weiteren Sicherung des Formteils 32 kann der freie Außenrand der Ringstufe 28 an den Stellen 38 partiell gegen das Formteil 32 umgebördelt werden.

Wie insbesondere aus Fig. 1 und 2b zu ersehen ist, weist der Nutenstein 20 ein der hinterschnittenen Profilnut angepaßtes, im wesentlichen T-förmiges Profil auf und ist an seiner dem Nutengrund zugewandten Fläche 40 teilzylindrisch gekrümmt. Dadurch ist es möglich, den Nutenstein frontseitig in die Profilnut 12 einzuführen und innerhalb der Profilnut so zu verschwenken, daß er sich mit den Spannflächen 42 verdrehungssicher an den Hinterschneidungsflanken 16 abstützen kann.

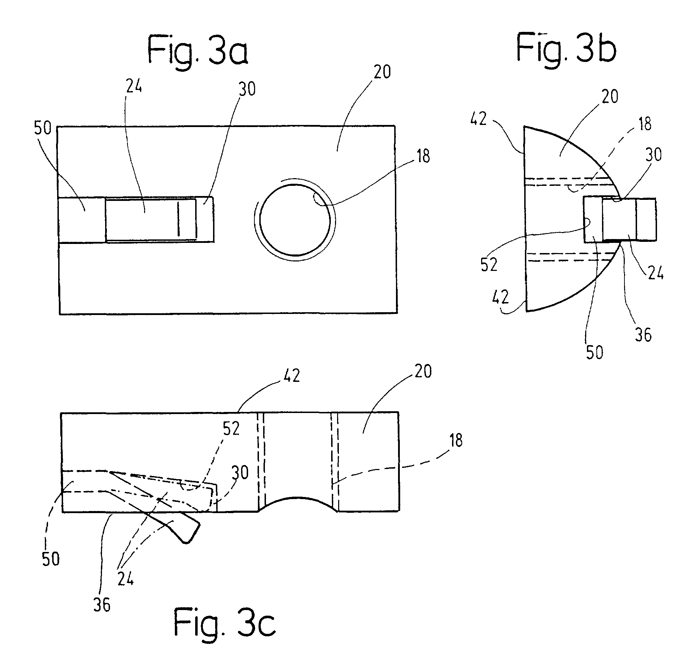

Das in Fig. 3a bis c gezeigte Ausführungsbeispiel eines Nutensteins 20 unterscheidet sich von dem vorstehend beschriebenen Nutenstein vor allem darin, daß die nutartige Ausnehmung 30 nicht bis zur Gewindebohrung 18 reicht. Das Formteil weist ein von der Schraube 26 nicht durchsetztes Basiselement 50 auf, an dem die Federzunge 24 angeformt ist und mit dem es im Preßsitz in die Ausnehmung 30 eingesetzt ist. Zur weiteren Sicherung des Formteils 32 in der Ausnehmung 30 kann der Ausnehmungsrand gegen die Basispartie 50 partiell umgebördelt werden. Wie bereits beim Ausführungsbeispiel nach Fig. 2a bis c weist auch hier die Ausnehmung 30 einen in der Längserstreckung der Federzunge 24 zur Spitze der Federzunge hin schräg ansteigenden Boden 52 auf. Um auch bei diesem Ausführungsbeispiel eine Verdrehsicherung der Schraube 26 im Nutenstein zu erzielen, kann die Gewindebohrung des Nutensteins als selbsthemmendes Gewinde ausgebildet werden. Zur weiteren Verbesserung des Reibschlusses des Nutensteins 20 in der Profilnut 12 des Profilstabs 14 kann der Nutenstein an seinen gegen die Hinterschneidungsflanken 16 des Profilstabs 14 angepreßten Spannflächen 42 mit nicht dargestellten zackenförmigen Ausbiegungen oder Rippen versehen werden.

## Patentansprüche

1. Befestigungselement für den Einsatz in eine hinterschnittene Profilnut (12) eines Profilstabs (14) mit einem an Hinterschneidungsflanken (16) der Profilnut (12) verdrehungssicher abstützbaren, mindestens eine durchgehende Gewindebohrung (18) aufweisenden Nutenstein (20), einem zwischen dem Nutenstein (20) und dem Nutengrund (22) der Profilnut (12) abstützbaren Federelement (24) und einer von außen her in die Gewindebohrung (18) eindrehbaren Schraube (26), **dadurch gekennzeichnet, daß** in den Nutenstein (20) eine zur Gewindebohrung (18) konzentrisch erweiterte Ringstufe (28) und eine im wesentlichen radial in die Ringstufe (28) mündende, zum Nutengrund (22) der Profilnut (12) hin randoffene langgestreckte nutartige Ausnehmung (30) eingeformt ist, und daß ein in die Ringstufe (28) und die Ausnehmung (30) form- und/ oder kraftschlüssig einsetzbares Formteil (32) vorgesehen ist, das eine Öffnung (34) für den reibschlüssigen Durchgriff der Schraube (26) und eine das Federelement (24) bildende, über den Rand (36) der Ausnehmung (30) nach außen überstehende, entgegen der Federkraft in die Ausnehmung (30) einbiegbare Federzunge aufweist.

2. Befestigungselement nach Anspruch 1, **dadurch gekennzeichnet, daß** die Öffnung (34) des Formteils (32) gegenüber dem Gewindedurchmesser der Schraube (26) Untermaß aufweist.

3. Befestigungselement nach Anspruch 1 oder 2, **dadurch gekennzeichnet, daß** die Schraube (26) selbstschneidend in die Öffnung (34) des Formteils (32) eindrehbar ist.

4. Befestigungselement nach einem der Ansprüche 1 bis 3, **dadurch gekennzeichnet, daß** das Formteil (32) beim Eindrehen der Schraube (26) in die Öffnung (34) aufspreizbar und dabei in der Ringstufe (28) festklemmbar ist.

5. Befestigungselement nach einem der Ansprüche 1 bis 4, **dadurch gekennzeichnet, daß** die Ringstufe (28) als zur Gewindebohrung (18) konzentrische Plan- oder Profilsenkung ausgebildet ist.

6. Befestigungselement nach einem der Ansprüche 1 bis 5, **dadurch gekennzeichnet, daß** der freie Außenrand (38) der Ringstufe (28) zumindest partiell gegen das Formteil (32) umgebördelt ist.

7. Befestigungselement für den Einsatz in eine hinterschnittene Profilnut (12) eines Profilstabs (14) mit einem an Hinterschneidungsflanken (16) der Profilnut (12) verdrehungssicher abstützbaren, mindestens eine durchgehende Gewindebohrung (18) aufweisenden Nutenstein (20), einem zwischen dem Nutenstein (20) und dem Nutengrund (22) der Profilnut (12) abstützbaren Federelement (24) und einer von außen her in die Gewindebohrung (18) eindrehbaren Schraube (26), **dadurch gekennzeichnet, daß** in den Nutenstein (20) eine zum Nutengrund (22) der Profilnut (12) hin randoffene, langgestreckte nutartige Ausnehmung (30) eingeformt ist, und daß in der Ausnehmung (30) ein Formteil (32) angeordnet ist, das eine in der Ausnehmung (30) form- und/oder kraftschlüssig verankerte Basispartie (50) und mindestens eine an der Basispartie angeformte, das Federelement (24) bildende, über den Rand (36) der Ausnehmung (30) nach außen überstehende, entgegen der Federkraft in die Ausnehmung (30) einbiegbare Federzunge aufweist.

8. Befestigungselement nach Anspruch 7, **dadurch gekennzeichnet, daß** die Basispartie (50) im Preßsitz in der Ausnehmung (30) angeordnet ist.

9. Befestigungselement nach Anspruch 7 oder 8, **dadurch gekennzeichnet, daß** der Ausnehmungsrand (36) gegen die Basispartie (50) partiell umgebördelt ist.

10. Befestigungselement nach einem der Ansprüche 1 bis 9, **dadurch gekennzeichnet, daß** die Gewindebohrung (18) des Nutensteins (20) als selbsthemmendes Gewinde ausgebildet ist.

11. Befestigungselement nach einem der Ansprüche 1 bis 10, **dadurch gekennzeichnet, daß** der Nutenstein (20) an seinen gegen die Hinterschneidungsflanken (16) des Profilstabs (14) angepreßten Spannflächen (42) zackenförmige Ausbiegungen oder Rippen aufweist.

12. Befestigungselement nach einem der Ansprüche 1 bis 11, **dadurch gekennzeichnet, daß** die Ausnehmung (30) einen in der Längserstreckung der Federzunge (24) zur Spitze der Federzunge hin schräg ansteigenden Boden (52) aufweist.

13. Befestigungselement nach einem der Ansprüche 1 bis 12, **dadurch gekennzeichnet, daß** das Formteil (32) als Spritzgußteil aus elastischem Kunststoff, vorzugsweise aus Polyamid ausgebildet ist.

14. Befestigungselement nach einem der Ansprüche 1 bis 13, **dadurch gekennzeichnet, daß** der Nutenstein (20) ein der hinterschnittenen Profilnut (12) angepaßtes, im wesentlichen T-förmiges Profil aufweist.

15. Befestigungselement nach einem der Ansprüche 1 bis 14, **dadurch gekennzeichnet, daß** der Nutenstein (20) an seiner dem Nutengrund (22) zugewandten Fläche (40) teilzylindrisch gekrümmt ist.

16. Befestigungselement nach einem der Ansprüche 1 bis 15, **dadurch gekennzeichnet, daß** der Nutenstein (20) als Einschwenkmutter oder als Hammerkopfmutter ausgebildet ist.

## Claims

1. A securing component for insertion into an undercut shaped groove (12) of a strip section (14) comprising a sliding block (20) supportable in a non-rotatable manner on undercut flanks (16) of the shaped groove (12) and having at least one threaded bore (18), further comprising a spring member (24) adapted to be supported between the sliding block (20) and the groove base (22) of the shaped groove (12), and comprising a screw (26) adapted to be turned into the threaded bore (18) from the outside, **characterized in that** an annular step (28) widened concentrically in relation to the threaded bore (18) and a groove-like, extended recess (30) open at the edge towards the groove base (22) and opening substantially radially into the annular step (28) are formed into the sliding block (20), and **in that** there is provided a formed part (32) adapted to be inserted into the annular step (28) and the recess (30) in a form-fitting and/or friction-fitting manner, the formed part comprising an aperture (34) for the frictional engagement of the screw (26) and a leaf spring which forms the spring member (24) and projects outwards over the edge (36) of the recess (30) and is adapted to be bent into the recess (30) against the spring force.

2. The securing component of claim 1, **characterized in that** the aperture (34) of the formed part (32) has a smaller dimension than the thread diameter of the screw (26).

3. The securing component of claim 1 or 2, **characterized in that** the screw (26) is adapted to be turned into the aperture (34) of the formed part (32) in a self-tapping manner.

4. The securing component of one of claims 1 to 3, **characterized in that** the formed part (32) is adapted to expand when turning the screw (26) into the aperture (34) and thereby clamped within the annular step (28).

5. The securing component of one of claims 1 to 4, **characterized in that** the annular step (28) is formed to be a plane or profiled countersink arranged concentrically with respect to the threaded bore (18).

6. The securing component of one of claims 1 to 5, **characterized in that** the free outer edge (38) of the annular step (28) is flanged at least partially against the formed part (32).

7. A securing component for insertion into an undercut shaped groove (12) of a strip section (14) comprising a sliding block (20) supportable in a non-rotatable manner on undercut flanks (16) of the shaped groove (12) and having at least one threaded bore (18), further comprising a spring member (24) adapted to be supported between the sliding block (20) and the groove base (22) of the shaped groove (12), and comprising a screw (26) adapted to be turned into the threaded bore (18) from the outside, **characterized in that** a groove-like, extended recess (30) open at the edge towards the groove base (22) and opening substantially radially into the annular step (28) is formed into the sliding block (20), and **in that** a formed part (32) is disposed in the recess (30), which comprises a base portion (50) anchored in the recess (30) in a form-fitting and/or friction-fitting manner and at least one leaf spring which forms the spring member (24) and is formed onto the base portion, projects outwards over the edge (36) of the recess (30) and is adapted to be bent into the recess (30) against the spring force.

8. The securing component of claim 7, **characterized in that** the base portion (50) is pressed into the recess (30).

9. The securing component of claim 7 or 8, **characterized in that** the edge (36) of the recess is partially flanged against the base portion (50).

10. The securing component of one of claims 1 to 9, **characterized in that** the threaded bore (18) of the sliding block (20) is formed to be a self-locking thread.

11. The securing component of one of claims 1 to 10, **characterized in that** the sliding block (20) comprises serrated protrusions or ribs on its clamping surfaces (42) which are pressed against the undercut flanks (16) of the strip section (14).

12. The securing component of one of claims 1 to 11, **characterized in that** the recess (30) comprises a base (52) which ascends slanted toward the tip of the leaf spring in the longitudinal direction of the leaf spring (24).

13. The securing component of one of claims 1 to 12, **characterized in that** the formed part (32) is an injection-molded part made of elastomeric plastic, preferably of polyamide.

14. The securing component of one of claims 1 to 13, **characterized in that** the sliding block (20) has an essentially T-shaped profile matched to the undercut shaped groove (12).

15. The securing component of one of claims 1 to 14, **characterized in that** the sliding block (20) is curved partial-cylindrically at its surface (40) which faces the groove base (22).

16. The securing component of one of claims 1 to 15, **characterized in that** the sliding block (20) is formed to be a swivel nut or hammer head nut.

## Revendications

1. Elément de fixation pour utilisation dans une rainure profilée (12) contre-dépouillée d'une barre profilée (14), muni d'un coulisseau (20) présentant au moins un trou taraudé (18) continu et pouvant s'appuyer de manière résistante aux torsions sur des flancs de la contre-dépouille (16) de la rainure profilée (12), d'un élément à ressort (24) pouvant s'appuyer entre le coulisseau (20) et le fond de gorge (22) de la rainure profilée (12) et d'une vis (26) pouvant être serrée dans le trou taraudé (18) depuis l'extérieur, **caractérisé en ce que** dans le coulisseau (20) sont formés un gradin annulaire (28) élargi de manière concentrique en direction du trou taraudé (18) et un évidement (30) aboutissant de manière essentiellement radiale dans le gradin annulaire (28), ouvert sur le bord en direction du fond de gorge (22) de la rainure profilée (12) et allongé en forme de rainure, et **en ce qu'**une pièce usinée (32) insérable par engagement positif et/ou par gravité dans le gradin annulaire (28) et dans l'évidement (30) est prévue, cette pièce usinée présentant une ouverture (34) pour la pénétration à entraînement par friction de la vis (26) et une lame flexible formant l'élément à ressort (24), dépassant du bord (36) de l'évidement (30) vers l'extérieur et pouvant être infléchie dans l'évidement (30) contre la force de ressort.

2. Elément de fixation selon la revendication 1, **caractérisé en ce que** l'ouverture (34) de la pièce usinée (32) présente une dimension inférieure par rapport au diamètre du filetage de la vis (26).

3. Elément de fixation selon la revendication 1 ou 2, **caractérisé en ce que** la vis (26) peut être vissée de manière auto-taraudeuse dans l'ouverture (34) de la pièce usinée (32).

4. Elément de fixation selon l'une des revendications 1 à 3, **caractérisé en ce que** la pièce usinée (32) peut être écartée lors du serrage de la vis (26) dans l'ouverture (34) et être en même temps bloquée dans le gradin annulaire (28).

5. Elément de fixation selon l'une des revendications 1 à 4, **caractérisé en ce que** le gradin annulaire (28) est formé comme lamage ou abaissement profilé concentrique par rapport au trou taraudé (18).

6. Elément de fixation selon l'une des revendications 1 à 5, **caractérisé en ce que** le bord extérieur libre (38) du gradin annulaire (28) est rabattu au moins en partie contre la pièce usinée (32).

7. Elément de fixation selon pour utilisation dans une rainure profilée (12) contre-dépouillée d'une barre profilée (14), muni d'un coulisseau (20) présentant au moins un trou taraudé (18) continu et pouvant s'appuyer de manière résistante aux torsions sur des flancs de la contre-dépouille (16) de la rainure profilée (12), d'un élément à ressort (24) pouvant s'appuyer entre le coulisseau (20) et le fond de gorge (22) de la rainure profilée (12) et d'une vis (26) pouvant être serrée dans le trou taraudé (18) depuis l'extérieur, **caractérisé en ce que** dans le coulisseau (20) est formé un évidement (30) allongé en forme de rainure, ouvert sur les bords en direction du fond de gorge (22) de la rainure profilée (12), et **en ce qu'**une pièce usinée (32) est placée dans l'évidement (30), cette pièce usinée présentant une partie de base (50) ancrée dans l'évidement (30) par engagement positif et/ou par gravité et au moins une lame flexible formée sur la partie de base, formant l'élément à ressort (24), dépassant du bord (36) de l'évidement (30) vers l'extérieur et pouvant être infléchie dans l'évidement (30) contre la force de ressort.

8. Elément de fixation selon la revendication 7, **caractérisé en ce que** la partie de base (50) est placée par ajustage serré dans l'évidement (30).

9. Elément de fixation selon la revendication 7 ou 8, **caractérisé en ce que** le bord de l'évidement (36) est en partie rabattu contre la partie de base (50).

10. Elément de fixation selon l'une des revendications 1 à 9, **caractérisé en ce que** le trou taraudé (18) du coulisseau (20) est formé comme taraudage à blocage automatique.

11. Elément de fixation selon l'une des revendications 1 à 10, **caractérisé en ce que** le coulisseau (20) présente des cintrages ou nervures en forme de dents de scie sur ses surfaces de bridage (42) pressées contre les flancs de la contre-dépouille (16) de la barre profilée (14).

12. Elément de fixation selon l'une des revendications 1 à 11, **caractérisé en ce que** l'évidement (30) présente, dans le prolongement longitudinal de la lame flexible (24), un fond (52) montant de manière inclinée vers la pointe de la lame flexible.

13. Elément de fixation selon l'une des revendications 1 à 12, **caractérisé en ce que** la pièce usinée (32) est formée comme pièce injectée en matière plastique élastique, de préférence en polyamide.

14. Elément de fixation selon l'une des revendications 1 à 13, **caractérisé en ce que** le coulisseau (20) présente un profil essentiellement en forme de T, adapté à la rainure profilée (12) contre-dépouillée.

15. Elément de fixation selon l'une des revendications 1 à 14, **caractérisé en ce que** le coulisseau (20) est cintré en partie cylindriquement sur sa surface (40) tournée vers le fond de gorge (22).

16. Elément de fixation selon l'une des revendications 1 à 15, **caractérisé en ce que** le coulisseau (20) est formé comme écrou pivotant ou comme écrou à tête rectangulaire.
